## Europäisches Patentamt

## European Patent Office

## Office européen des brevets

(11) Veröffentlichungsnummer: **0 193 764**
**B1**

(12) **EUROPÄISCHE PATENTSCHRIFT**

(45) Veröffentlichungstag der Patentschrift: **05.09.90**

(51) Int. Cl.⁵: **H 04 M 3/50**

(21) Anmeldenummer: **86101905.7**

(22) Anmeldetag: **14.02.86**

(54) Verfahren zur Aufzeichnung von Sprachmitteilungen in einer zentralen Speichereinrichtung.

(30) Priorität: **01.03.85 DE 3507363**

(43) Veröffentlichungstag der Anmeldung:
**10.09.86 Patentblatt 86/37**

(45) Bekanntmachung des Hinweises auf die
Patenterteilung:
**05.09.90 Patentblatt 90/36**

(84) Benannte Vertragsstaaten:
**AT BE CH FR GB LI NL SE**

(56) Entgegenhaltungen:
**DE-A-3 221 685**
**DE-A-3 234 081**

(73) Patentinhaber: **Siemens Aktiengesellschaft**
**Wittelsbacherplatz 2**
**D-8000 München 2 (DE)**

(72) Erfinder: **Jensen, Peter-Grauer**
**Starupvej 225**
**DK-08340 Malling (DK)**

## Beschreibung

Verfahren zur Speicherung von für einen Teilnehmer einer Fernsprechvermittlungsanlage bestimmten Sprachmitteilungen in einer über ein Fernsprechendgerät erreichbaren zentralen Speichereinrichtung von der diesem Teilnehmer die ihn betreffenden Sprachmitteilungen übermittelbar sind, wobei zur Steuerung der im Rahmen der dabei möglichen Funktionsabläufe aufgrund entsprechender Benutzereingaben Steuerinformation von dem jeweiligen Endgerät ausgesendet werden.

Moderne rechnergesteuerte Fernsprechvermittlungssysteme bieten eine Vielzahl von Leistungsmerkmalen. Hierzu gehört beispielsweise die zeitversetzte Übermittlung von Sprachmitteilungen, die jeweils in einem bestimmten Speicherbereich einer zentralen Speicheranordnung, der einem Teilnehmer fest zugeordnet ist, hinterlegt werden können. Die Sprachspeicherung und die verwaltete Übermittlung der individuellen Informationen kann sowohl im öffentlichen Telefonnetz als auch in den Nebenstellenvermittlungssystemen relaisiert werden. Derjenige, für den Sprachmitteilungen in der Speichereinrichtung hinterlegbar sind, kann diese zu einem von ihm freiwählbaren Zeitpunkt anhören. Darüber hinaus ist es möglich am jeweiligen Teilnehmerendgerät automatisch zu signalisieren, daß im Sprachspeicher eine Mitteilung vorliegt.

Neben dem Aufsprechen der einzelnen Mitteilungen durch den Absender und dem Anhören durch den Empfänger ist es möglich, die Mitteilungen zu editieren. So kann beispielsweise beim Herstellen der Mitteilung der Absender diese löschen, ändern und korrigieren. Der Empfänger kann sich beispielsweise seine Mitteilung in Teilen oder auch mehrmals anhören. Der Absender hat die Möglichkeit eine Information darüber, ob und wann seine Mitteilung zugestellt worden ist, abzufragen. Ein unbefugter Empfang von Sprachmitteilungen wird u.a. dadurch verhindert, daß sich der Empfänger dem System gegenüber als berechtigt ausweisen muß. Dies kann durch die Übermittlung von Identifizierungskennzeichen erfolgen, die jeweils einem Teilnehmer individuell zugeordnet sind.

Die einzelnen Funktionen des Sprachspeichersystems können durch eine, die einzelnen Maßnahmen jeweils kennzeichnende Signalisierung beansprucht werden. Dies kann beispielsweise durch Betätigung der Wählvorrichtung des Telefonapparates erfolgen, der als Endgerät zur Verfügung steht. Als Eingangsinformation für das Sprachspeichersystem steht also im Regelfall ein Informationsfluß zur Verfügung, in dem neben den Sprachinformationen auch Steuerinformationen enthalten sind. Mit diesen Steuerinformationen kann der Teilnehmer beim Erstellen einer Sprachmitteilung diese ändern. Diese Steuerinformationen können also zwischen den Sprachinformationen abgesetzt werden.

Es ist die Aufgabe der Erfindung bei einem Verfahren der eingangs genannten Art (siehe z.B. Dokument DE—A—3 221 685) eine Störung der Sprachaufzeichnung durch derartige Steuerinformationen zu vermeiden.

Dies wird dadurch erreicht, daß alle im Zusammenhang mit der vorzunehmenden spracheinspeicherung aknommenden Informationen die aufeinanderfolgend sowohl Sprachmitteilungen als auch Steuerinformationen betreffen können, unmittelbar einer Auswerteeinrichtung, die Steuerinformationen im Informationsfluß erkennt, zugeführt werden, daß eine Einspeicherung nach Ablauf einer festen Verzögerungszeit, die mindestens der für die Erkennung einer Steuerinformation notwendigen Erkennungszeit entspricht, erfolgt, und daß sofern diese Auswerteeinrichtung das Vorliegen einer Steuerinformation erkennt, die Einspeicherung einer Information in die Speichereinrichtung mindestens bis zum Ablauf der anstehenden Steuerinformation unterbleibt.

Durch das erfindungsgemäße Verfahren wird sichergestellt, daß lediglich eine Einspeicherung der im Informationsfluß enthaltenen Nutzdaten, d.h. der Sprachinformationen erfolgt. Die dazwischen liegenden Steuerinformationen, die beispielsweise in Form von Hörtönen oder von MFV-Zeichen auftreten, werden nicht eingespeichert. Dadurch wird vermieden, daß bei der Wiedergabe der gespeicherten Informationen eine unerwünschte Störung durch mit aufgezeichnete Steuerinformationen auftritt. Durch die generelle Verzögerung einer anstehenden Information wird in einfacher Weise berücksichtigt, daß das Erkennen einer Steuerinformation in dem Informationsfluß eine gewisse Zeit beansprucht. Es ist also nicht erforderlich erst nach der Erkennung eines Steuerzeichens die Einspeicherung zu unterbrechen, um den bis zu diesem Zeitpunkt bereits eingespeicherten Steuerinformationsteil wieder zu löschen. Das würde zusätzliche Verfahrensschritte erfordern, die beim erfindungsgemäßen Verfahren entfallen.

Die vorgesehene Verzögerung wird erfindungsgemäß durch eine Zwischenspeicherung erzielt. Wird eine Steuerinformation erkannt, so wird die Einspeicherung nicht nur bis zum registrierten Ende diese Steuerinformation unterbunden sondern die Einspeicherung bleibt darüber hinaus noch um die Erkennungszeit gesperrt. Dadurch wird vermieden, daß Steuerinformationen, die im Zwischenspeicher enthalten sind, in die Speichereinrichtung übernommen werden. Die im Sprachspeichersystem zu verarbeitenden Informationen sind vorzugsweise PCM-codierte Signalfolgen. Dies betrifft die Sprachinformationen und die Steuerinformationen.

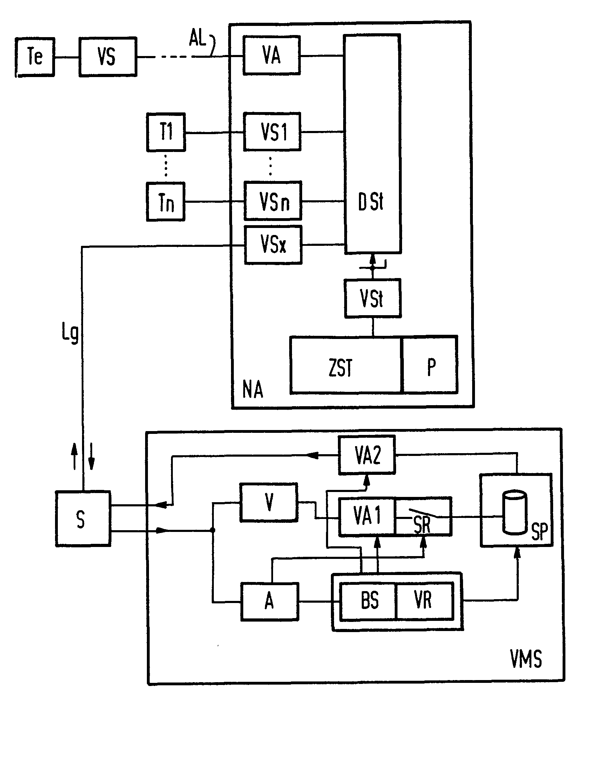

Das erfindungsgemäße Verfahren wird anhand eines in der Figur dargestellten Ausführungsbeispiels, das nur die zum Verständnis erforderlichen Einzelheiten zeigt, erläutert. Es sind in einem stark vereinfachten Blockschaltbild Teile einer Nebenstellenanlage NA dargestellt, die beispielsweise eine rechnergesteuerte speicherprogrammierte Vermittlungsanlage sein kann. Die zentrale Steuereinrichtung ZST steuert im wesentlichen die für die einzelnen Betriebsmöglichkeiten der Anlage erforderlichen Abläufe. Dabei greift sie auf entsprechende Programmteile zurück, die in der ihr zugeordneten Speichereinrichtung P abgespeichert sind. Mit VSt ist eine Verteilersteuerung und mit DST eine dezentrale Steuerung, der jeweils eine bestimmte Anzahl von Einrichtungen, wie beispielsweise Teilnehmerstellen T1 bis Tn zugeordnet sind, bezeichnet. Unter der Voraussetzung eines digitalen Vermittlungssystems mit diese dezentrale Teilsteuerung DST funktionsmäßig ein rechnergesteuerter Speicherbereich, in dem die digitalen Sprachsignale eingespeichert und zum jeweiligen Verbindungspartner ausgelesen werden. Sie stellt also das digitale Koppelnetz dar. Die Einheit VSt ist eine spezielle Verteiler- und Anpassungssteuerung, um mehrere dezentrale Teilsteuerungen DST, an die jeweils Sätze angekoppelt sind, bedienen zu können. So erfolgt beispielsweise die Anschaltung der Teilnehmerstellen T1 bis Tn über die Sätze VS1 bis VSn. Über ein Amtsleitungsbündel bzw. über eine Amtsleitung AL ist die Nebenstellenanlage NA mit einer externen Anlage, beispielsweise mit der Vermittlungsanlage VS des öffentlichen Netzes verbunden. Stellvertretend für die daran angeschlossenen Endgeräte ist als Endgerät die Teilnehmerstelle Te dargestellt. Der weiterführenden Leitung AL bzw. dem weiterführenden Leitungsbündel ist ein Vermittlungssatz VA zugeordnet. Die insgesamt dargestellten Vermittlungssätze der Nebenstellenanlage können also aktive Sätze ausgebildet sein, die einen Prozessor beinhalten. Durch diesen wird dann eine gewisse Vorverarbeitung von Informationen durchgeführt, die z.B. von den in einem Teilnehmersatz enthaltenden Indikationsstellen geliefert werden.

An die Vermittlungsanlage NA ist über den Satz VSx und die Schnittstelle S ein Sprachspeichersystem VMS angeschlossen. In einer Speichereinrichtung SP werden Sprachmitteilungen, die für einen bestimmten Teilnehmer erfolgen, abgespeichert. Dieser Teilnehmer hat dann die Möglichkeit, die Mitteilung gezielt abzufragen. Sowohl beim Erstellen einer Nachricht als auch beim Abhören derselben stehen dem Teilnehmer verschiedene Bedienfunktionen zur Verfügung. Hierzu gehören beispielsweise Start/Stop der Ein- bzw. Ausgabe, Wiederholung der Nachricht, Vorlauf/Rücklauf, das Löschen und Ändern einer Nachricht. Eine solche Sprachmitteilung kann dann auch durch weitere Informationen, wie beispielsweise die Indentität des Absenders, den Zeitpunkt des Absendens usw. ergänzt sein. Sind im Speicher SP Nachrichten für einen Teilnehmer eingetroffen, so kann ihm dies signalisiert werden.

Für die neue zeitversetzte Art der Kommunikation, die eine zentrale Sprachspeicherung und die verwaltete Übermittlung der Sprachmitteilungen ermöglicht, kann als Endgerät der vorhandene Fernsprechapparat verwende werden. Der Teilnehmer signalisiert seine Bedienwünsche durch Betätigen des Gabelkontaktes und der Wählvorrichtung. In umgekehrter Richtung kann er Wekker- und Ruftöne sowie aus einem entsprechenden Speicher entnommene gesprochene Anweisungen erhalten. Zur Beanspruchung der einzelnen Funktionen des Sprachspeichersystems wählt also der Teilnehmer, der eine Sprachmitteilung für einen anderen Teilnehmer einspeichert, bestimmte Ziffern oder Ziffernkombinationen ein. Aufgrund dieser Steuerinformationen wird dann der jeweils zugeordnete Funktionsablauf veranlaßt.

Die über die Leitungsverbindung Lg, die im Regelfall mehrere Kanäle beinhaltet, ankommenden Sprach- bzw. Steuerinformationen sollen als PCM-codierte Signalfolgen anliegen. Die Steuerinformationen werden als im Mehrfrequenzverfahren abgegebene MFV-Zeichen übermittelt. Jedes dieser Zeichen besteht bekanntlich aus zwei Frequenzen, wobei je eine Frequenz aus einer unteren und aus einer oberen Frequenzgruppe, die jeweils im Sprachband liegen, verwendet wird. Es soll nun vermieden werden, daß die MFV-Zeichen mit eingespeichert werden damit beim Abhören u.a. keine störenden Geräusche auftreten. Im Sprachspeichersystem ist eine Auswerteeinrichtung A vorhanden, die nach einer gewissen Zeit Steuerinformationen, die im Informationsfluß aufgrund der vom Teilnehmer signalisierten Bedienwünsche auftreten, erkennen kann. Diese Auswerteeinheit steht in Verbindung mit einer Einheit, die aus einer Bediensteuerung BS und einem Verwaltungsrechner VR besteht. Die Informationen, die über die zur Anpassung vorhandene Schnittstelle S eintreffen, werden unmittelbar der Auswerteeinheit Z zugeführt. Die Übergabe in die der Speichereinrichtung vorangestellten Verarbeitungseinheit VA1 erfolgt jedoch nach einer fest vorgegebenen Verzögerungszeit. Diese Verzögerungszeit, nach der die digitalen Signalfolgen der Verarbeitungseinheit VA1 übergeben werden, wird mit Hilfe der Einheit V erzielt. Diese Verzögerungszeit ist nun so gewählt, daß sie mindestens der Zeit, nach der die Auswerteeinheit A ein Steuerzeichen als solches erkennen kann, entspricht. In der Einheit VA1 wird eine Vorverarbeitung der über die Einheit V eintreffenden Informationen vorgenommen, damit der Speicheraufwand reduziert werden kann. Eine Möglichkeit dieser Vorverarbeitung besteht beispielsweise darin die PCM-Signale in sogenannte ADPCM-Signale umzuwandeln. Dieses Vorverarbeitungsverfahren, mit dem das digitalisierte Sprachsignal in komprimierter Form gespeichert werden kann, wird als das adaptive Differenz-PCM-Verfahren bezeichnet. Diese für sich bekannte Vorverarbeitung in der Einheit VA1 erfolgt in Abhängigkeit von Informationen, die von der Einheit BS und vom Verwaltungsrechner VR übermittelt werden. Durch diesen Verwaltungsrechner werden in Abhängigkeit von den Wünschen des jeweiligen Teilnehmers die Ein- bzw. Ausspeichervorgänge der Speichereinrichtung SP gesteuert. Dies trifft in gleicher Weise für die Einspeicherung von begleitenden Informationen, wie beispielsweise der Identität des die Nachricht absendenden Teilnehmers oder des Zeitpunktes des Absendens zu. Eine Einspeicherung von begleitenden Informationen, wie beispielsweise der der Weg von der Vorverarbeitungseinheit VA1 zur Speichereinrichtung SP durch die Schalteinrichtung SR geschlossen ist. Dieser nur symbolisch dargestellte elektronisch Schalter SR wird von der Einheit BS gesteuert.

Der über die Leitung Lg eintreffende und über die Schnittstelle S weitergegebene Informationsfluß wird also unmittelbar von der Auswerteeinrichtung daraufhin bewertet, ob Steuerinformationen in Form von PCM-codierten MFV-Kennzeichen vorliegen. Hierzu ist eine bestimmte Erkennungszeit erforderlich. Die Signalfolgen werden um diese Zeit verzögert an die Verarbeitungseinheit VA1 weitergegeben, falls kein MFV-Kennzeichen erkannt wird. In einem solchen Fall ist die eintreffende Information eine Sprachinformation, die aufgrund der Verarbeitung in der Einheit VA1 in komprimierter Form bei geschlossenem Schalter SR in der Speichereinrichtung SP abgespeichert wird. Wird dagegen bei der ständigen Auswertung der Signalfolge in der Einheit A ein MFV-Kennzeichen erkannt, so wird unmittelbar der Einspeicherweg durch Öffnen des Schalters SR unterbrochen. Diese Unterbrechung bleibt zumindest solange bestehen, solange das MFV-Kennzeichen andauert. Jedes als Kennzahl von einem Teilnehmer eingegebene derartige Kennzeichen hat eine bestimmte Bedeutung. Der Teilnehmer will damit eine bestimmte Leistung des Sprachspeichersystems VMS beanspruchen. Der Absender der Sprachmitteilung will beispielsweise bei der vorgenommenen Benutzung dieses Sprachspeichersystems eine Sprachmitteilung löschen, ändern oder korrigieren. Die Bediensteuerung gibt die von der Auswerteeinheit A erkannte und bewertete Steuerinformation an den Verwaltungsrechner VR. Dieses veranlaßt dann die jeweils notwendigen Folgefunktionen. Dieser hat auch in gleicher Weise wie die Einheit BS Zugriff zu der Verarbeitungseinheit VA1 bzw. zu der in ihrer Funktion noch zu erläuternden Verarbeitungseinheit VA2. Dadurch können die vom Teilnehmer signalisierten Wünsche in Form von Steuerungsfunktion für diese genannten Verarbeitungseinheiten berücksichtigt werden. In dem Zeitraum der für die Erkennung eines MFV-Kennzeichens erforderlich ist, wurde bei einer entsprechenden Ausführung der Verzögerungseinheit V ein Teil dieser Information in diese Einheit übernommen. Um nun zu verhindern, daß dieser Zeichenrest nach der Freigabe des Einspeicherzweiges in die Speichereinrichtung gelangt, wird der Schalter SR nicht unmittelbar mit Beendigunt des ausgewerteten Kennzeichens geschlossen. Er bleibt noch für eine Zeit, die dieser Verzögerungszeit entspricht, im geöffneten Zustand. Erst danach wird die Schließung veranlaßt, so daß der vorhandene Zeichenrest ohne weitere Auswirkung ausgelesen wurde.

Auch bei der Ausspeicherung einer Nachricht aus der Speichereinrichtung SP für den hierzu berechtigten Teilnehmer erfolgt die Aussendung von MFV-Kennzeichen. Durch den Teilnehmer werden beispielsweise Kennzahlen eingewählt, mit denen er sich gegenüber dem Sprachspeichersystem VMS als berechtigt ausweist oder mit denen der Wunsch nach Wiederholung der Nachricht signalisiert wird. Diese Kennzeichen werden in gleicher Weise von der Einheit A ausgewertet und führen über die Einheit BS zu entsprechenden Information für den Verwaltungsrechner VR. Die Verarbeitungseinheit VA2 dient dazu beim Ausspeichern die in komprimierter Form in der Speichereinrichtung SP enthaltenen Informationen in normal codierte PCM-Informationen umzuwandeln. Diese werden dann über die Schnittstelle S unter Einbeziehung der Vermittlungsanlage VA zu einer Teilnehmerstelle, beispielsweise der Teilnehmerstelle T1 übertragen. Über den dazugehörigen Fernsprechapparat können somit die ursprünglich abgespeicherten Sprachinformationen vom jeweils berechtigten Teilnehmer abgehört werden.

**Patentansprüche**

1. Verfahren zur Speicherung von für einen Teilnehmer (Te, T1, . . ., Tn) einer Fernsprechvermittlungsanlage (NA) bestimmten Sprachmitteilungen in einer über ein Fernsprechendgerät erreichbaren zentralen Speichereinrichtung (SP) von der diesem Teilnehmer die ihn betreffenden Sprachmitteilungen übermittelbar sind, wobei zur Steuerung der im Rahmen der dabei möglichen Funktionsabläufe aufgrund entsprechender Benutzereingaben Steuerinformationen von dem jeweiligen Endgerät ausgesendet werden, dadurch gekennzeichnet, daß alle im Zusammenhang mit der vorzunehmenden Spracheinspeicherung ankommenden Informationen, die aufeinanderfolgend sowohl Sprachmitteilungen als auch Steuerinformationen betreffen können, unmittelbar einer Auswerteeinrichtung (A), die Steuerinformationen im Informationsfluß erkennt, zugeführt werden, daß eine Einspeicherung nach Ablauf einer festen Verzögerungszeit (V), die mindestens der für die Erkennung einer Steuerinformation notwenidgen Erkennungszeit entspricht, erfolgt und daß sofern diese Auswerteeinrichtung (A) das Vorliegen einer Steuerinformation erkennt, die Einspeicherung einer Information in die Speichereinrichtung (SP) mindestens bis zum Ablauf der anstehenden Steuerinformation unterbleibt.

2. Verfahren nach Patentanspruch 1, dadurch gekennzeichnet, daß die Verzögerungszeit vermittels einer Zwischenspeicherung erzielt wird und daß bei einer anstehenden Steuerinformation die Einspeicherung solange unterbunden bleibt, bis über das registrierte Ende dieser Steuerinformation hinaus eine der Erkennungszeit entsprechende Zeit abgelaufen ist.

3. Verfahren nach Patentanspruch 1, dadurch gekennzeichnet, daß die ankommenden Informationen digitale Signalfolgen darstellen.

## Revendications

1. Procédé pour mémoriser des communications téléphoniques destinées à un abonné (Te, T1, . . ., Tn) d'un central téléphonique (NA), dans un dispositif central de mémoire (SP), qui peut être atteint par l'intermédiaire d'un appareil téléphonique terminal et à partir duquel les communications téléphoniques concernant cet abonné peuvent lui être retransmises, des informations de commande pouvant être émises par l'appareil terminal respectif pour la commande des cycles fonctionnels possibles, sur la base de données correspondantes introduites par l'utilisateur, caractérisé par le fait que toutes les informations arrivantes liées à la mémorisation, devant être exécutée, de signaux vocaux et pouvant concerner successivement aussi bien des communications formées de signaux vocaux que des informations de commande, sont envoyées directement à un dispositif d'évaluation (A), qui identifie des informations de commande dans le flux d'informations, qu'une mémorisation est réalisée après l'écoulement d'un temps de retard fixe (V), qui correspond au moins au temps d'identification nécessaire pour identifier une information de commande, et que dans la mesure où ce dispositif d'évaluation (A) identifie la présence d'une information de commande, la mémorisation d'une information dans le dispositif de mémoire (SP) est suspendue au moins jusqu'à la fin de l'information de commande appliquée.

2. Procédé suivant la revendication 1, caractérisé par le fait que le temps de retard est obtenu au moyen d'une mémorisation intermédiaire et que, dans le cas de la présence d'une information de commande, la mémorisation reste suspendue jusqu'à ce qu'un intervalle de temps correspondant au temps d'identification se soit écoulé après la fin enregistrée de cette information de commande.

3. Procédé suivant la revendication 1, caractérisé par le fait que les informations arrivantes sont des suites de signaux numériques.

## Claims

1. Method for storing voice communications, intended for a subscriber (Te, T1, ... Tn) of a telephone switching system (NA), in a central memory (SP) which may be reached via telephone terminal equipment, it being possible to transmit the voice communications pertaining to the subscriber from said memory, whereby control information is transmitted from the respective terminal equipment for the control of the operational sequences thereby possible on the basis of corresponding user entries, characterized in that all the information arriving in conjunction with the voice storage to be undertaken, which information can successively pertain to both voice communications and to control information, is immediately supplied to an evaluator (A) which recognized control information in the information stream, in that a storage occurs after the elapse of a fixed delay time (V) which corresponds at least to the recognition time required for the recognition of a control information item, and in that, in so far as said evaluator (A) recognizes the presence of a control information item, the storage of an information item in the memory (SP) is suppressed at least until the execution of the pending control information.

2. Method according to Patent Claim 1, characterized in that the delay time is achieved by means of an intermediate storage, and in that, when a control information item is pending, the storage is suppressed until a time, extending beyond the registered end of this control information item, corresponding to the recognition time has elapsed.

3. Method according to Patent Claim 1, characterized in that digital signal sequences constitute the incoming information.